# EUROPEAN PATENT SPECIFICATION

(11) **EP 4 448 805 B1**
(45) Date of publication and mention of the grant of the patent: **28.10.2026**
(21) Application number: 21834912.4
(22) Date of filing: 16.12.2021
(51) Int. Cl.: C21B 5/00, C21B 13/00, C21C 5/52, C21B 5/06, C21B 7/00, C21C 5/28

(54) **STEELMAKING METHOD AND ASSOCIATED NETWORK OF PLANTS**
STAHLHERSTELLUNGSVERFAHREN UND ZUGEHÖRIGES NETZWERK VON ANLAGEN
PROCÉDÉ DE PRODUCTION D'ACIER ET RÉSEAU D'INSTALLATIONS ASSOCIÉ

(43) Date of publication of application: 23.10.2024
(73) Proprietor: ArcelorMittal, 1160 Luxembourg (LU)
(72) Inventor: BAQUET GONZÁLEZ, Ignacio, 33401 Entreviñas-aviles Asturias (ES); HERRERO BLANCO, Ignacio, 33208 Gijón Asturias (ES); REBOUL, Jean-Luc, Didier, 13320 Bouc Bel Air (FR)
(74) Representative: Lavoix
(86) International application number: PCT/IB2021/061836
(87) International publication number: WO 2023/111652

(56) References cited:
- EP-A1- 3 425 070
- US-A1- 2004 226 406
- DIEMER P ET AL: "POTENTIALS FOR UTILISATION OF COKE OVEN GAS IN INTEGRATED IRON AND STEEL WORKS//POTENTIALE ZUR VERWERTUNG DES KOKSOFENGASES IN INTEGRIERTEN HUETTENWERKEN", STAHL UND EISEN,, vol. 124, no. 7, 15 July 2004 (2004-07-15), pages 21 - 30, XP009036658, ISSN: 0340-4803

## Description

The invention is related to a steelmaking method having a reduced carbon footprint and to the associated network of plants.

Steel can currently be produced through two main manufacturing routes. Nowadays, most commonly used production route named "BF-BOF route" consists in producing hot metal in a blast furnace, by use of a reducing agent, mainly coke, to reduce iron oxides and then transform hot metal into steel into a converter process or Basic Oxygen furnace (BOF). This route, both in the production of coke from coal in a coking plant and in the production of the hot metal, releases significant quantities of CO2.

The second main route involves so-called "direct reduction methods". Among them are methods according to the brands MIDREX, FINMET, ENERGIRON/HYL, COREX, FINEX etc., in which sponge iron is produced in the form of HDRI (hot direct reduced iron), CDRI (cold direct reduced iron), or HBI (hot briquetted iron) from the direct reduction of iron oxide carriers. Sponge iron in the form of HDRI, CDRI, and HBI usually undergo further processing in electric arc furnaces. Non patent document "POTENTIALS FOR UTILISATION OF COKE OVEN GAS IN INTEGRATED IRON AND STEEL WORKS//POTENTIALE ZUR VERWERTUNG DES KOKSOFENGASES IN INTEGRIERTEN HUETTENWERKEN" from DIEMER P ET AL (ISSN: 0340-4803) and patent document US 2004/226406 A1 further disclose a steelmaking method using a DRI plant together with a blast furnace.

Reducing CO2 emissions to meet climate targets is challenging as the currently dominating form of steelmaking, the blast furnace-basic oxygen furnace (BF-BOF) route is dependent on coal as a reductant and fuel. There are two options for reducing CO2 emissions from steelmaking: to keep the BF-BOF route and implement carbon capture use and/or storage of CO2 (CCUS) technology, or to seek new low-emissions processes.

A first step towards CO2 emissions reductions maybe then to switch from a BF-BOF route to a DRI route. As this represents big changes, both in terms of equipment, but also in terms of process, all blast furnaces will not be replaced at once by direct reduction equipment.

Moreover, although an ever-increasing part of the steel demand will be covered with scrap/DRI-based production, the need for steel production will remain high and the classical BF technology is still expected to be the major production route for many decades to come. There would thus be some plants where the different equipment will coexist.

This switch from one route to the other represents both technical and economic challenges which have first to be solved before a carbon-neutral production route is made available. For example, more DRI equipment imply less blast furnaces and thus less blast furnace gases. But those blast furnace gases were used within the steelmaking plant, notably as energy source and replacing them by fossil energy sources would not lead in the right direction.

There is thus a need for a method allowing to produce steel according to a hybrid BF / DRI route with a reduced CO2 footprint.

This problem is solved by a method and a network of plants according to appended claims 1-15.

The method of the invention may also comprise the following optional characteristics considered separately or according to all possible technical combinations:
- the method further comprises a step of producing coke and a coke oven gas in a coke plant, said coke being charged into the blast furnace for the hot metal production step, said coke oven gas being at least partly used as reducing gas into the direct reduction plant,
- the reducing gas further comprises green hydrogen,
- the coke oven gas is at least partly used as reductant in the hot metal production,
- the reduction top gas is at least partly used as reductant in the hot metal production,
- the reduction top gas is injected as reductant into the shaft of the blast furnace,
- the reduction top gas is at least partly recycled within the direct reduction plant as part of the reducing gas,
- the syngas has a composition which fulfils a ratio reductants versus oxidants calculated as (%H2+%CO)/(%H2O+%CO2) higher than 10, and a ratio %H2/%CO > 1,
- the blast furnace top gas is at least partly recycled within the blast furnace as reductant;
- the blast furnace top gas is at least partly sent to a chemicals production unit,
- the blast furnace top gas is used to heat the reducing gas,
- the blast furnace top gas is used for the gasification of solid waste fuels,
- the hot metal is used in the electric furnace to produce molten metal,
- scrap is used in the electric furnace to produce molten metal,
- all the steps are supplied with renewable energy.

The invention is also related to a network of plants comprising a direct reduction plant producing direct reduced iron and a reduction top gas using a reducing gas, a blast furnace producing hot metal and a blast furnace top gas using reductants, an electric furnace producing molten metal and electric furnace gas using the produced direct reduced iron, a waste gasification plant producing a syngas from the gasification of solid waste fuels, a gas network connecting at least the direct reduction plant to the waste gasification plant and to the blast furnace so that the reducing gas comprises at least a part of the syngas and the blast furnace top gas being at least partly used into the direct reduction plant.

Other characteristics and advantages of the invention will emerge clearly from the description of it that is given below by way of an indication and which is in no way restrictive, with reference to the appended figures in which:

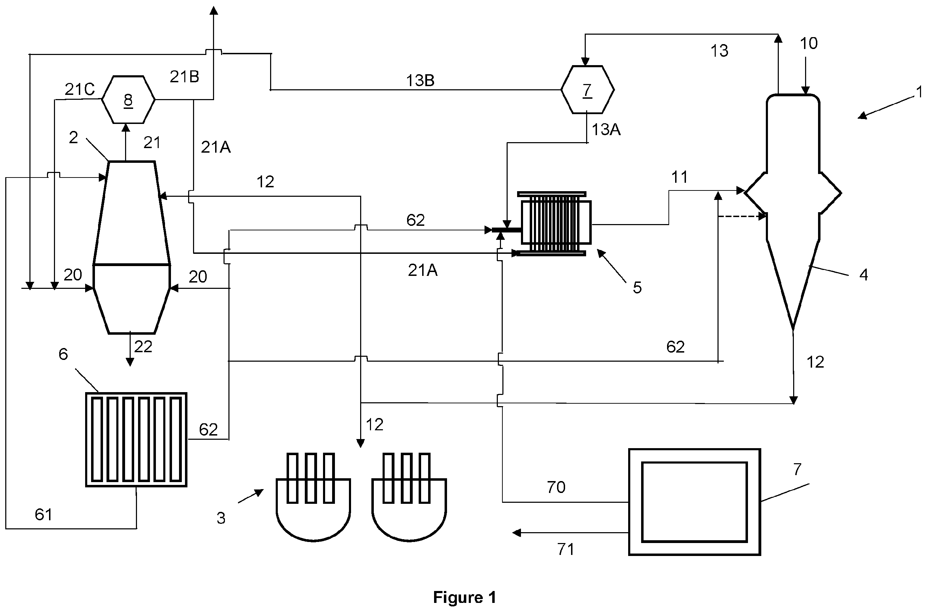

- Figure 1 illustrates a plant allowing to perform a method according to the invention
Elements in the figures are illustration and may not have been drawn to scale.

Figure 1 illustrates a plant comprising a direct reduction plant 1, a blast furnace 2, an electric furnace 3 and a waste gasification furnace 7.

The direct reduction plant 1 comprises a shaft furnace 4 and a gas preparation device 5. In working mode, iron oxide ores and pellets 10 containing around 30% by weight of oxygen are charged to the top of the shaft furnace 4 and are allowed to descend, by gravity, through a reducing gas 11. This reducing gas 11 prepared by the gas preparation device 5 is injected into the furnace 4 so as to flow counter-current from the charged oxidised iron. Oxygen contained in ores and pellets is removed in stepwise reduction of iron oxides in counter-current reaction between gases and oxide. Oxidant content of gas is increasing while gas is moving to the top of the furnace. Reduced iron, also called DRI product 12 exits at the bottom of the furnace 4 while a reduction top gas 13 exits at the top of the furnace 4. This reduction top gas 13 is captured and treated in a first gas treatment unit 7. Composition of this reduction top gas 13 vary according to the composition of the reducing gas 11 injected into the shaft furnace 4.

The blast furnace 2 is a gas-liquid-solid counter-current chemical reactor whose main objective is to produce hot metal 22, which can be then converted to steel by reducing its carbon content or used for other purposes. The blast furnace 2 is conventionally supplied with solid materials, mainly sinter, pellets, iron ore and carbonaceous material, generally coke, charged into its upper part, called throat of the blast furnace. The liquids consisting of hot metal and slag are tapped from the crucible in the bottom of the blast furnace 2. The iron-containing burden (sinter, pellets and iron ore) is converted to hot metal 22 conventionally by reducing the iron oxides with a reducing gas (containing CO, H2 and N2 in particular), which is formed by partial combustion of the carbonaceous material thanks to a hot blast 20 injected by tuyeres located in the lower part of the blast furnace, usually at a temperature between 1000 and 1300°C. Injections of reductants may also be performed in the upper part of the blast furnace, above the tuyeres, this is usually called shaft injection.

The resulting gas exhaust at the top of the blast furnace and is called blast furnace top gas 21. This blast furnace top gas 21 is captured and treated in a second gas treatment unit 8. Composition of this blast furnace top gas 21 varies according to the composition of the reductants injected into the blast furnace 2.

The electric furnace 3 maybe of different kinds. It may notably be an electric arc furnace (EAF), a submerged arc furnace (SAF) or an open bath furnace (OSBF). The aim of this furnace is to melt the charged material, among this charge material being at least a part of the direct reduced iron 12 produced by the direct reduction plant 1. This direct reduced iron 12 may be charged hot directly at the exit of the direct reduction plant 1 or cold. The electric furnace may also be charged with hot metal 22 produced by a blast furnace and/or scrap. According to the technology and charged material used, the produced molten metal can, for example, be either sent to a converter to reduce carbon content and/or to secondary metallurgy to refine steel and bring it to the appropriate composition for further processing steps.

The waste gasification furnace 7 subjects waste to thermal decomposition and gasification. Gasification is the thermochemical conversion of a carbonaceous fuel, at high temperature (400-1000°C) along with the presence of an oxidizing agent to obtain a gaseous product characterized by CO, CO2, H2, CH4, H2O, and N2, with varying compound ratios depending on gasification conditions and raw material selection. In the method according to the invention solid waste fuels are subjected to said gasification.

Solid waste fuels encompass notably both type of wastes, namely the refused derived fuels (RDF) and the Solid Recovered Fuel (SRF). In a preferred embodiment, gasification of SRF is performed. Refuse derived fuel (RDF) is produced from domestic and business waste, which includes biodegradable material as well as plastics. Non-combustible materials such as glass and metals are removed, and the residual material is then shredded. Solid recovered fuel (SRF) is produced from mainly commercial waste including paper, card, wood, textiles and plastic.

In the embodiment of figure 1 the plant further comprises a coke plant 6, which is optional to perform the method according to the invention. Coke 61 is manufactured by heating coal to very high temperatures, usually around 1000°C, in so-called "coke ovens" which are thermally insulated chambers. During the cooking of coal, organic substances in the coal blend vaporize or decompose, producing a coke oven gas (COG) 62 and coal-tar (a thick dark liquid used in industry and medicine).

In a preferred embodiment all those plants are operated with renewable energy which is defined as energy that is collected from renewable resources, which are naturally replenished on a human timescale, including sources like sunlight, wind, rain, tides, waves, and geothermal heat. In some embodiments, the use of electricity coming from nuclear sources can be used as it is not emitting CO₂ to be produced.

In the method according to the invention the reducing gas 11 used in the direct reduction plant 1 comprises a syngas 70 resulting from the gasification of solid waste fuels in the waste gasification plant 7 and at least a part 21A the blast furnace top gas or BFG is used in the direct reduction plant 1.

Solid waste fuels are gasified in the waste gasification plant 7 and the thus obtained gaseous product 70 is used as reducing gas 11 in the direct reduction plant. Compounds ratio in the gaseous product 70 and associated process parameters of the gasification are determined according to the other components of the reducing gas 11 so as to fulfil necessary reducing conditions for the direct reduction process. The gaseous product 70 may be subjected to conditioning step such as reforming or partial oxidation to get the appropriate composition for the use as part of the reducing gas 11.

Use of said syngas allows to replace part of the natural gas used into the reducing gas while using non-fossil fuels which thus contributes to reduce the overall carbon footprint of the process. Moreover, it creates a synergy with existing environment of the steelmaking plant allowing to reduce even more globally the carbon footprint.

In a preferred embodiment this syngas composition fulfils a ratio reductants versus oxidants calculated as (%H2+%CO)/(%H2O+%CO2) higher than 10, and a ratio %H2/%CO > 1. Said syngas further preferentially comprises less than 3%v of CO2 and less than 0,5%v of N2 when entering the gas preparation device 5, all percentages being expressed in volume. It further preferentially comprises less than 5 mg/Nm3 of tar and dust, less than 0,1 g/Nm3 of NH3 and less than 0,1 g/Nm3 of C10H8.

In a most preferred embodiment, the waste gasification plant 7 emits two gas streams 70 and 71, the first gas stream being used as syngas for the reducing gas 11 while the second gas stream 71 may be used as heating gas within the other equipment of the plant.

In another embodiment when the plant comprises a coke plant 6, the reducing gas also comprises coke oven gas 62. Said coke oven gas 62 may also be injected into the shaft furnace 4 independently of the reducing gas. In this configuration it is used as a carbon source in order to increase the carbon content of the DRI product without additional use of external carbon.

In a preferred embodiment the reducing gas 11 also comprises green hydrogen, preferably more than 50% in volume. Green hydrogen is a hydrogen-produced fuel obtained from electrolysis of water with electricity generated by low-carbon power sources which includes notably electricity from renewable source as previously defined.

In another embodiment, the reducing gas 11 may also comprise a part of the direct reduction top gas 13A after its treatment in the first gas treatment unit 7. This first gas treatment unit 7 may, among other devices, comprise a water removal device and a CO2 separation unit. In another embodiment (not represented) this direct reduction top gas 13 may also be used as heat source to heat for example the reducing gas 11 or for other heating applications within the steelmaking plant.

In another embodiment the reduction top gas 13B may also be sent to the blast furnace 2. It may be injected through the tuyeres as part of the hot blast 20 or preferentially as reductant for injection at the shaft level.

In the method according to the invention the blast furnace top gas 21 or BFG is at least partly used in the direct reduction plant 1. There, it may be used to heat the reducing gas 11 in the gas preparation device 5, either by direct thermal exchange or by use as fuel in burners. The blast furnace top gas 21 is recovered and treated in the second gas treatment unit 8. This second gas treatment unit 8 may, among other devices, comprise a dust filter unit, a water removal device and a CO2 separation unit such as a Pressure Swing Adsorption device. It may be split in two streams 21A, 21B, the first stream 21A being sent to the direct reduction plant 1. In a preferred embodiment the second stream 21B of BFG is sent to a carbon transformation unit, where it is turned into other products such as chemicals. It may for example be sent to a fermentation unit where it is transformed into hydrocarbons. In another embodiment this second stream 21C is re-injected into the blast furnace as part of the hot blast 20 or as reductant at shaft level. In another embodiment the BFG may be used in the waste gasification plant 7. The BFG may be split into as many streams as necessary for the different uses described in previous embodiments.

With the method according to the invention it is possible to produce steel using a hybrid BF/DRI route with reduced carbon footprint This method moreover allows to make the transition between the most commonly used BF/BOF route towards a DRI-based carbon neutral route in a sustainable way.

In the embodiment of figure 1 all plants are represented together but they may be located on different production sites and the different gases and material transported from plant to another by appropriate means.

All the different embodiment described may be used in combination with one another when technically possible.

## Claims

1. Steel manufacturing method comprising the steps of:
a. Producing direct reduced iron (12) and a reduction top gas (13) in a direct reduction plant (1) using a reducing gas (11), said direct reduction gas (11) comprising a syngas (70) resulting from the gasification of solid waste fuels, said solid waste fuels being refused derived fuels and/or solid recovered fuels,
b. Producing hot metal (22) and a blast furnace top gas (21) in a blast furnace (2) using a hot blast (20), the blast furnace top gas (21) being at least partly (21A) used into the direct reduction plant (1)
c. Producing molten metal and electric furnace gas in an electric furnace (3) using the produced direct reduced iron (12).

2. Method according to claim 1 further comprising a step of producing coke (61) and a coke oven gas (62) in a coke plant (6), said coke (61) being charged into the blast furnace (2) for the hot metal production step, said coke oven gas (62) being at least partly used as reducing gas into the direct reduction plant.

3. Method according to anyone of the previous claims wherein the reducing gas (11) further comprises green hydrogen, said green hydrogen being hydrogen-produced fuel obtained from electrolysis of water with electricity generated by low-carbon power sources which includes notably electricity from renewable source.

4. Method according to anyone of the previous claims wherein the reduction top gas (13B) is at least partly used as reductant in the hot metal production.

5. Method according to claim 5 wherein the reduction top gas (13B) is injected as reductant into the shaft of the blast furnace (2).

6. Method according to anyone of the previous claims wherein the reduction top gas (13A) is at least partly recycled within the direct reduction plant (1) as part of the reducing gas (11).

7. Method according to anyone of the previous claims wherein the syngas (70) has a composition which fulfils a ratio reductants versus oxidants calculated as (%H2+%CO)/(%H2O+%CO2) higher than 10, and a ratio %H2/%CO > 1, all percentages being expressed in volume.

8. Method according to anyone of the previous claims wherein the blast furnace top gas (21) is at least partly recycled within the blast furnace (2) as part of the hot blast (20).

9. Method according to anyone of the previous claims wherein blast furnace top gas (21) is at least partly sent to a chemicals production unit.

10. Method according to anyone of the previous claims wherein the blast furnace top gas (21) is used to heat the reducing gas (11).

11. Method according to anyone of the previous claims wherein the blast furnace top gas (21) is used for the gasification of the solid waste fuels.

12. Method according to anyone of the previous claims wherein the hot metal (22) is used in the electric furnace to produce molten metal.

13. Method according to anyone of the previous claims wherein scrap is used in the electric furnace to produce molten metal.

14. Method according to anyone of the previous claims wherein all the steps are supplied with renewable energy.

15. A network of plants comprising:
a. a direct reduction plant (1) configured to produce direct reduced iron (12) and a reduction top gas (13) using a reducing gas (11),
b. a blast furnace (2) configured to produce hot metal (22) and a blast furnace top gas (21) using reductants (20),
c. an electric furnace (3) configured to produce molten metal and electric furnace gas using the produced direct reduced iron (12),
d. a waste gasification plant (7) configured to produce a syngas (70) from the gasification of solid waste fuels, said solid waste fuels being refused derived fuels and/or solid recovered fuels,
e. a gas network connecting at least the direct reduction plant (1) to the waste gasification plant (7) and to the blast furnace (2) so that the reducing gas (11) comprise at least a part of the syngas (70) and the blast furnace top gas (21) being at least partly (21A) used into the direct reduction plant (1).

## Patentansprüche

1. Verfahren zur Herstellung von Stahl, umfassend die Schritte:
a. Herstellen von direkt reduziertem Eisen (12) und einem Reduktions-Topgas (13) in einer Direktreduktionsanlage (1) unter Verwendung eines Reduktionsgases (11), wobei das Direktreduktionsgas (11) ein Synthesegas (70) umfasst, das aus der Vergasung von festen Abfallbrennstoffen resultiert, wobei die festen Abfallbrennstoffe aus Abfällen gewonnene Brennstoffe und/oder aus festen Abfällen gewonnene Brennstoffe sind,
b. Herstellen von Roheisen (22) und einem Hochofen-Topgas (21) in einem Hochofen
(2) unter Verwendung eines Heißwindes (20), wobei das Hochofen-Topgas (21) zumindest teilweise
(21A) in der Direktreduktionsanlage (1) verwendet wird
c. Herstellen von geschmolzenem Metall und Elektroofengas in einem Elektroofen (3) unter Verwendung des hergestellten direkt reduzierten Eisens (12).

2. Verfahren nach Anspruch 1, ferner umfassend einen Schritt des Herstellens von Koks (6) und eines Kokereigases (62) in einer Kokerei (6), wobei der Koks (61) für den Roheisenherstellungsschritt in den Hochofen (2) eingebracht wird, wobei das Kokereigas (62) zumindest teilweise als Reduktionsgas in der Direktreduktionsanlage verwendet wird.

3. Verfahren nach einem beliebigen der vorhergehenden Ansprüche, wobei das Reduktionsgas (11) ferner grünen Wasserstoff umfasst, wobei der grüne Wasserstoff ein durch Wasserstoff erzeugter Brennstoff ist, der durch Elektrolyse von Wasser mit Elektrizität erhalten wird, die durch kohlenstoffarme Energiequellen erzeugt wird, welche insbesondere Elektrizität aus erneuerbaren Quellen einschließen.

4. Verfahren nach einem beliebigen der vorhergehenden Ansprüche, wobei das Reduktions-Topgas (13B) zumindest teilweise als Reduktionsmittel bei der Roheisenherstellung verwendet wird.

5. Verfahren nach Anspruch 4, wobei das Reduktions-Topgas (13B) als Reduktionsmittel in den Schacht des Hochofens (2) eingeblasen wird.

6. Verfahren nach einem beliebigen der vorhergehenden Ansprüche, wobei das Reduktions-Topgas (13A) zumindest teilweise innerhalb der Direktreduktionsanlage (1) als Teil des Reduktionsgases (11) rezirkuliert wird.

7. Verfahren nach einem beliebigen der vorhergehenden Ansprüche, wobei das Synthesegas (70) eine Zusammensetzung aufweist, die ein Verhältnis von Reduktionsmitteln zu Oxidationsmitteln, berechnet als (%H2+%CO)/ (%H2O+%CO2), von mehr als 10 erfüllt, und ein Verhältnis %H2/%CO > 1, wobei alle Prozentsätze in Volumen ausgedrückt sind.

8. Verfahren nach einem beliebigen der vorhergehenden Ansprüche, wobei das Hochofen-Topgas (21) zumindest teilweise innerhalb des Hochofens (2) als Teil des Heißwindes rezirkuliert wird
(20).

9. Verfahren nach einem beliebigen der vorhergehenden Ansprüche, wobei das Hochofen-Topgas (21) zumindest teilweise an eine Chemikalienherstellungseinheit geleitet wird.

10. Verfahren nach einem beliebigen der vorhergehenden Ansprüche, wobei das Hochofen-Topgas (21) zum Erwärmen des Reduktionsgases (11) verwendet wird.

11. Verfahren nach einem beliebigen der vorhergehenden Ansprüche, wobei das Hochofen-Topgas (21) für die Vergasung der festen Abfallbrennstoffe verwendet wird.

12. Verfahren nach einem beliebigen der vorhergehenden Ansprüche, wobei das Roheisen
(22) in dem Elektroofen verwendet wird, um geschmolzenes Metall herzustellen.

13. Verfahren nach einem beliebigen der vorhergehenden Ansprüche, wobei Schrott in dem Elektroofen verwendet wird, um geschmolzenes Metall herzustellen.

14. Verfahren nach einem beliebigen der vorhergehenden Ansprüche, wobei alle Schritte mit erneuerbarer Energie versorgt werden.

15. Netzwerk von Anlagen, umfassend:
a. eine Direktreduktionsanlage (1), die dazu eingerichtet ist, direkt reduziertes Eisen (12) und ein
i. Reduktions-Topgas (13) unter Verwendung eines Reduktionsgases (11) herzustellen,
b. einen Hochofen (2), der dazu eingerichtet ist, Roheisen (22) und ein Hochofen-Topgas
i. (21) unter Verwendung von Reduktionsmitteln (20) herzustellen,
c. einen Elektroofen (3), der dazu eingerichtet ist, geschmolzenes Metall und Elektroofengas unter Verwendung des hergestellten direkt reduzierten Eisens (12) herzustellen,
d. eine Abfallvergasungsanlage (7), die dazu eingerichtet ist, ein Synthesegas (70) aus der Vergasung von festen Abfallbrennstoffen herzustellen, wobei die festen Abfallbrennstoffe aus Abfällen gewonnene Brennstoffe und/oder aus festen Abfällen gewonnene Brennstoffe sind
e. ein Gasnetz, das zumindest die Direktreduktionsanlage (1) mit der Abfallvergasungsanlage (7) und mit dem Hochofen (2) verbindet, so dass das Reduktionsgas (11) zumindest einen Teil des Synthesegases (70) umfasst und das Hochofen-Topgas (21) zumindest teilweise (21A) in der Direktreduktionsanlage (1 verwendet wird).

## Revendications

1. Procédé de fabrication d'acier comprenant les étapes consistant à :
a. Produire du fer réduit directement (12) et un gaz de gueulard de réduction (13) dans une installation de réduction directe (1) au moyen d'un gaz réducteur (11), ledit gaz de réduction directe (11) comprenant un gaz de synthèse (70) résultant de la gazéification de combustibles solides issus de déchets, lesdits combustibles solides issus de déchets étant des combustibles dérivés de déchets refusés et/ou des combustibles solides récupérés,
b. Produire du métal chaud (22) et un gaz de gueulard de haut fourneau (21) dans un haut fourneau
(2) au moyen d'un vent chaud (20), le gaz de gueulard de haut fourneau (21) étant au moins en partie
(21A) utilisé dans l'installation de réduction directe (1)
c. Produire du métal fondu et un gaz de four électrique dans un four électrique (3) au moyen du fer réduit directement (12) produit.

2. Procédé selon la revendication 1 comprenant en outre une étape de production de coke (61) et d'un gaz de cokerie (62) dans une cokerie (6), ledit coke (61) étant chargé dans le haut fourneau (2) pour l'étape de production de métal chaud, ledit gaz de cokerie (62) étant au moins en partie utilisé comme gaz réducteur dans l'installation de réduction directe.

3. Procédé selon l'une quelconque des revendications précédentes, dans lequel le gaz réducteur (11) comprend en outre de l'hydrogène vert, ledit hydrogène vert étant un combustible produit à partir d'hydrogène obtenu par électrolyse de l'eau avec de l'électricité produite par des sources d'énergie à faible teneur en carbone, qui comprend notamment de l'électricité provenant d'une source renouvelable.

4. Procédé selon l'une quelconque des revendications précédentes, dans lequel le gaz de gueulard de réduction (13B) est au moins en partie utilisé comme réducteur dans la production de métal chaud.

5. Procédé selon la revendication 4, dans lequel le gaz de gueulard de réduction (13B) est injecté comme réducteur dans la cuve du haut fourneau (2).

6. Procédé selon l'une quelconque des revendications précédentes, dans lequel le gaz de gueulard de réduction (13A) est au moins en partie recyclé au sein de l'installation de réduction directe (1) en tant que partie du gaz réducteur (11).

7. Procédé selon l'une quelconque des revendications précédentes, dans lequel le gaz de synthèse (70) a une composition qui satisfait un rapport réducteurs par rapport aux oxydants calculé comme (%H2+%CO)/ (%H2O+%CO2) supérieur à 10, et un rapport %H2/%CO > 1, tous les pourcentages étant exprimés en volume.

8. Procédé selon l'une quelconque des revendications précédentes, dans lequel le gaz de gueulard de haut fourneau (21) est au moins en partie recyclé au sein du haut fourneau (2) en tant que partie du vent chaud (20).

9. Procédé selon l'une quelconque des revendications précédentes, dans lequel le gaz de gueulard de haut fourneau (21) est au moins en partie envoyé vers une unité de production de produits chimiques.

10. Procédé selon l'une quelconque des revendications précédentes, dans lequel le gaz de gueulard de haut fourneau (21) est utilisé pour chauffer le gaz réducteur (11).

11. Procédé selon l'une quelconque des revendications précédentes, dans lequel le gaz de gueulard de haut fourneau (21) est utilisé pour la gazéification des combustibles solides issus de déchets.

12. Procédé selon l'une quelconque des revendications précédentes, dans lequel le métal chaud
(22) est utilisé dans le four électrique pour produire du métal fondu.

13. Procédé selon l'une quelconque des revendications précédentes, dans lequel de la ferraille est utilisée dans le four électrique pour produire du métal fondu.

14. Procédé selon l'une quelconque des revendications précédentes, dans lequel toutes les étapes sont alimentées par de l'énergie renouvelable.

15. Réseau d'installations comprenant :
a. une installation de réduction directe (1) configurée pour produire du fer réduit directement (12) et un
i. gaz de gueulard de réduction (13) au moyen d'un gaz réducteur (11),
b. un haut fourneau (2) configuré pour produire du métal chaud (22) et un gaz de gueulard de haut fourneau
i. (21) au moyen de réducteurs (20),
c. un four électrique (3) configuré pour produire du métal fondu et un gaz de four électrique au moyen du fer réduit directement (12) produit,
d. une installation de gazéification de déchets (7) configurée pour produire un gaz de synthèse (70) à partir de la gazéification de combustibles solides issus de déchets, lesdits combustibles solides issus de déchets étant des combustibles dérivés de déchets refusés et/ou des combustibles solides récupérés
e. un réseau de gaz reliant au moins l'installation de réduction directe (1) à l'installation de gazéification de déchets (7) et au haut fourneau (2) de sorte que le gaz réducteur (11) comprenne au moins une partie du gaz de synthèse (70) et le gaz de gueulard de haut fourneau (21) étant au moins en partie (21A) utilisé dans l'installation de réduction directe (1^{).}
